Europäisches Patentamt

European Patent Office

Office européen des brevets

(19)

(11) Publication number: **0 501 054 A1**

## EUROPEAN PATENT APPLICATION

(12)

(21) Application number: **91301659.8**

(22) Date of filing: **28.02.91**

(51) Int. Cl.5: **B01D 53/14**

(43) Date of publication of application:
**02.09.92 Bulletin 92/36**

(84) Designated Contracting States:
**BE DE FR GB IT NL**

(71) Applicant: **Hewitt, J. Paul**
**14814 Carolcrest**
**Houston, Texas 77079(US)**

(72) Inventor: **Hewitt, J. Paul**
**14814 Carolcrest**
**Houston, Texas 77079(US)**

(74) Representative: **Cropp, John Anthony David et al**
**MATHYS & SOUIRE 10 Fleet Street**
**London, EC4Y 1AY(GB)**

(54) **Vapour recovery system.**

(57) An integrated vapor recovery system is disclosed which includes an absorber column and a stripping column. Storage tanks are provided for the lean oil and rich oil so that the stripping column may be operated independently of the absorber column. Level switches are provided in the rich oil storage tank to automatically start and stop the stripping column in response to the liquid level in the rich oil tank.

EP 0 501 054 A1

## BACKGROUND OF THE INVENTION

### Field of the Invention

The present invention relates to vapor recovery systems for preventing the escape of hydrocarbon vapors to the atmosphere during the transfer of hydrocarbon liquid. In particular, the invention relates to recovery of hydrocarbon vapors collected upon the loading and unloading of hydrocarbon transportation vessels such as tank trucks, barges and ships. More particularly, the invention relates to an improvement in absorber type vapor recovery systems in which the vapors are absorbed in an oil and later separated from the oil by fractional distillation with the separated oil being reused to absorbed additional vapors.

### Related Art

The art of absorbing vapors in a liquid is old and well known. Generally the vapors are contacted in counter-current flow with the absorbing medium in an absorber column containing liquid-vapor contact structure. The contact structure may be inert packing or special trays of various varieties. Usually the vapors enter at the bottom of the column and the absorbing medium at the top.

The absorber liquid medium entering the top of the column is most generally referred to as "lean oil", especially in hydrocarbon absorptions, to distinguish it from the liquid leaving the bottom of the column which is called "rich oil" because it is saturated with the absorbed vapors. Typically the lean oil is chilled before introduction to the column to promote condensation as well as absorption of the vapors.

The rich oil from the bottom of the column may simply be combined with the lean oil fed to the column until the lean oil has become saturated with the vapors. At that point the "lean oil" must be replaced or "regenerated" by removal of the absorbed vapors, as by fractional distillation. Such a system is described in Environmental Protection Agency Report EPA/450/3-76-038a entitled "Background Information on Hydrocarbon Emissions From Marine Terminal operations, Vol. I: Discussion", at pages 139-146.

Another common operation is to continuously "regenerate" the rich oil to lean oil by fractional distillation in a stripping column or stripper while the absorption operation is progressing. The lean oil from the stripper is recycled directly back to the absorber. This system is disclosed in U.S. Pat. No. 3,981,156.

The vapors recovered from the distillation may be liquified and stored for blending into a useful product. Alternatively, the liquified hydrocarbons may simply be returned to the vessel from which they came. The alternative disposition of the recovered vapors is disclosed in the above cited U.S. Pat. No. 2,849,150 and U.S. patent 2,765,872.

Since the vapor recovery systems operate at loading and unloading terminals they only have to operate during actual loading and unloading of vessels. Quantities and composition of vapors produced vary with seasonal temperature, size of the vessel and the volatility of the product being loaded or unloaded. Due to the cyclical nature of the operations, one reference, U.S. patent 2,849,150 includes a control for actuating the vapor recovery system when enough vapors have been collected for efficient operation.

In a typical integrated system the energy requirement for the fractional distillation section is at least twice that for the absorption. During start up of the stripper, all of the equipment must be heated and the equilibrium temperature of the system reached. In prior integrated systems this must occur every time a vessel is loaded or unloaded.

The invention is a way to achieve the stripping efficiency of the EPA reference and the absorbing efficiency of the constant lean oil process. It is an advantage of the present invention that the absorber can be designed for the low vapor containing lean oil and the stripper can be designed for a more constant rich oil feed. It is a further advantage of the present invention that the stripping section may be operated less frequently than the absorber and for lengthier periods saving the energy lost during more frequent start-ups. These and other advantages and feature of the present invention will become apparent from the following.

## SUMMARY OF THE INVENTION

Briefly the present invention provides an integrated vapor recovery system in which the absorption and stripping cycles operate independently of each other. Lean oil is supplied to the absorber during loading and unloading operations from a storage tank. The rich oil from the absorber, containing the absorbed vapors, is collected in a separate rich oil storage tank. When the volume of liquid in the rich oil storage tank is sufficient for efficient operation of the stripping column, the equipment associated with the stripper is activated by a liquid level switch in the rich oil storage tank. When a minimum level is reached in the rich oil storage tank a second level switch shuts off the equipment.

BRIEF DESCRIPTION OF THE DRAWING

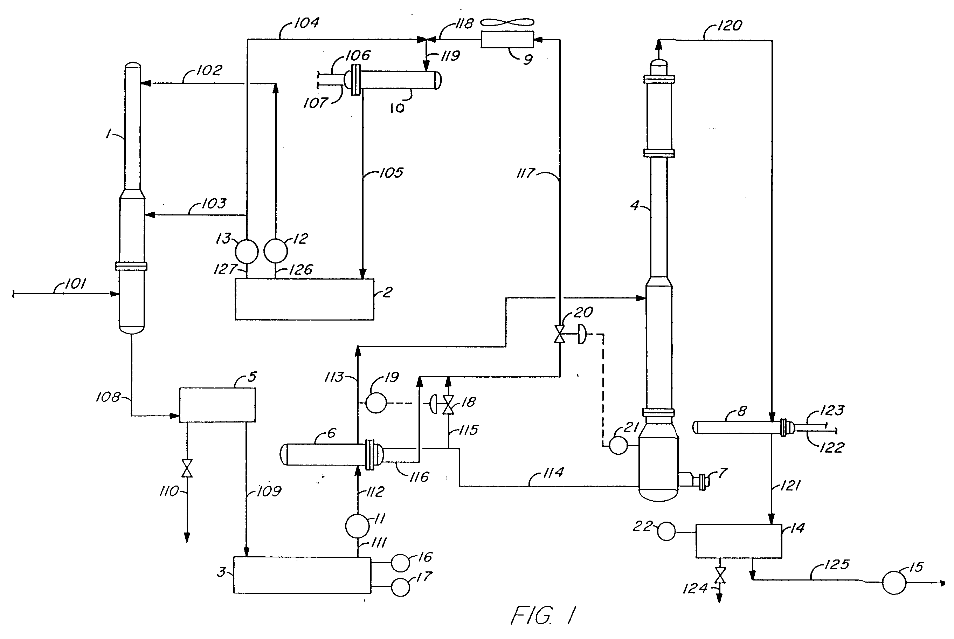

FIG. 1 is a process flow diagram showing major equipment and controls in-schematic form.

DETAILED DESCRIPTION OF THE PREFERRED EMBODIMENT

A detailed description of a preferred embodiment is provided by reference to FIG. 1 which is a flow diagram in schematic form. Major equipment and process controls are identified and may be selected from a reading of the drawing by those of ordinary skill in the art. Ancillary equipment may be added as deemed advisable by the individual designer.

Hydrocarbon vapors are taken from a vessel (not shown) loading or unloading via flow line 101 to absorber column 1 and enter near the bottom of the column. Lean oil is taken from lean oil storage tank 2 by pump 12 via suction line 126 through flow line 102 to the top of the absorber column 1. Lean oil in storage tank 2 is chilled to about 40°F by circulation through lean oil chiller 10 by pump 13 via flow lines 127, 104, and 105. Lean oil chiller 10 is provided with coolant via flow line 106, as from a refrigeration section (not shown), which is returned via flow line 107. Line 104 is normally closed except when circulation is required to lower the temperature of the lean oil, e.g., on start up or after prolonged periods of inactivity.

Lean oil may be delivered to the middle of absorber column 1 via flow line 103. This provides a unique feature of the present invention which allows the system to have a 100% overload capacity. When the pressure increases in the bottom of absorber 1 due to a predetermined pressure drop across the packed beds (not shown), a pressure switch (not shown) senses the increased pressure and start pump 13, thereby distributing additional lean oil across a lower portion of the packed bed in the absorber. The vapors removed in the lower portion of the bed prevent flooding of the upper portion of the bed.

The hydrocarbon vapors are contacted with the lean oil within absorber column 1 in counter-current flow with the vapors being absorbed or condensed by the chilled lean oil. The now rich oil, containing the absorbed and condensed vapors, exits the bottom of the column 1 via flow line 108 and is passed through water knock out drum 5 where water is removed via drain line 110. The rich oil continues on via flow line 109 to rich oil storage tank 3. Both storage tanks may be underground if desired.

As rich oil collects in the rich oil storage tank 3 the liquid level rises until high level switch 16 senses the level and activates the stripping column 4 and associated equipment including rich oil pump 11, reboiler heater 7, lean oil cooler 9 and any refrigeration equipment associated with the stripping column 4 such as coolant pumps (not shown) for condenser 8.

Rich oil is taken by pump 11 via suction line 111 and flow line 112 through lean oil/rich oil heat exchanger where it is preheated to about 310°F by indirect heat exchange with bottoms from the stripper column 4. The preheated rich oil is then introduced into stripping column 4 via flow line 113. The lower boiling hydrocarbons absorbed in the absorber column 1 are removed from the rich oil in the stripping column 4 and taken overhead to condenser 8 via flow line 120. After condensation and cooling to about 40°F in condenser 8, the hydrocarbons are collected in product pump suction drum 14 via flow line 121. When the liquid level in the drum 14 is sufficiently high, level switch 22 activates product pump 15 which takes suction from drum 14 through suction line 125 and pumps the hydrocarbons to storage.

Liquid level in the column in the bottom of the column 4 is maintained by level controller 21 which operates level control valve 20 in lean oil flow line 117. Heat for the fractional distillation is provided by reboiler 7, circulation through which is maintained by appropriate means such as thermal siphon. In this specific embodiment reboiler 7 is designed to heat the bottoms to a maximum temperature of about 650°F. In actual operation, the bottoms exit the column 4 at about 430°F.

The now again lean oil exits the stripping column 4 from the bottom via flow line 114 and is passed to the lean oil/rich oil heat exchanger 6 where it preheats the rich oil and is cooled in the process to about 170°F. Temperature control for the rich oil leaving the exchanger 6 is effected by a lean oil by pass line 115 around exchanger 6, the flow through which is controlled by temperature controller 19 on rich oil line 113 and temperature control valve 18 on by pass line 115. The lean oil is then passed via flow lines 116 and 117 to lean oil cooler 9 where it is further cooled to about 120°F before being passed to lean oil chiller 10 via flow lines 118 and 119 and thence back to lean oil storage tank 2 for use when needed.

If deemed desirable, the storage tanks 2 and 3, and drums 5 and 14 may be vented back to the absorber column 4 through flow lines not shown.

The functions of the various elements of the system have been described as a schematic representation. Valves and possibly other conventional hardware have been omitted, but those in the art would be able to routinely select and position these to obtain the functions.

Some typical equipment specifications for a particular unit are listed below in TABLE I following. The process temperatures and equipment specifications are given for illustration purposes only and are not intended to limit the scope of the invention which is defined by the appended claims.

TABLE I

Typical Equipment Specifications

1. Pumps

| Dwg. Ref. No. | Flow, GPM | Suction, PSIG | Discharge, PSIG |
|---|---|---|---|
| 11 | 9.4 | 0 | 25 |
| 12 | 32.5 | 0 | 25 |
| 13 | 22.5 | 0 | 25 |

2. Heating/cooling

| Dwg. Ref. No. | Shell In, °F | Shell Out, °F | Tube In, °F | Tube Out, °F | BTU/hr |
|---|---|---|---|---|---|
| 6 | 170 | 430 | 94 | 310 | 500M |
| 7 | -- | -- | -- | -- | 90KW ≈400M |
| 8 | -- | -- | 140 | 40 | 94M |
| 9 | -- | -- | 310 | 120 | 80M |
| 10 | -- | -- | 120 | 40 | 180M |

3. Columns

| Dwg. Ref. No. | Dia, Inches | Height, Ft. | DP, psi | DT, °F |
|---|---|---|---|---|
| 1 | 24 x 18 | 26 | 1 | 100 |
| 4 | 24 x 16 x 12 | 38 | 25 | 650 |

4. Tanks

| Dwg. Ref. No. | Capacity, Gals. |
|---|---|
| 2 | 8,000 |
| 3 | 8,000 |

## Claims

1. A vapor recovery system comprising an integrated vapor absorbing section and a rich oil stripping section, characterised in that said system includes means allowing said vapor absorbing section and said rich oil stripping section to operate independently.

2. The vapor recovery system of claim 1 wherein said means comprises separate lean oil and rich oil storage tanks and control means in said rich oil storage tank for activating and deactivating said stripping section in response to the liquid level in said rich oil storage tank.

3. The vapor recovery system of claim 2 wherein said control means comprises a first liquid level switch to activate said stripping section at a predetermined high liquid level in said rich oil storage tank and a second liquid level switch that deactivates said stripping section at a predetermined low liquid level in said rich oil storage tank.

4. An integrated hydrocarbon vapor recovery system comprising:
   (a) an absorber column containing liquid-vapor contact structure and having-vapor inlet means, lean oil inlet means and rich oil outlet means;
   (b) a lean oil storage tank in fluid communication with said lean oil inlet means;
   (c) a rich oil storage tank in fluid communication with said rich oil outlet means;
   (d) a stripping column containing liquid-vapor contact structure having rich oil inlet means in fluid communication with said rich oil storage tank, overhead vapor outlet means, and recovered oil outlet means; and
   (e) means associated with said rich oil storage tank and said stripping column to activate and deactivate said stripping column in response to predetermined liquid levels in said rich oil storage tank.

5. The integrated hydrocarbon vapor recovery system of claim 4 further comprising fluid connection means for connecting said recovered oil outlet means to said lean oil storage tank to return the recovered oil from said stripping column to said lean oil storage tank.

6. The integrated hydrocarbon vapor recovery system of claim 4 or claim 5 further comprising a lean oil chiller in fluid connection with said lean oil storage tank such that the lean oil in said lean oil storage tank nay be circulated through said lean oil chiller.

7. The integrated hydrocarbon vapor recovery system of anyone of claims 4 to 6 further comprising a condenser in fluid connection with said overhead vapor outlet means to condense the vapors from said stripping column.

8. The integrated hydrocarbon vapor recovery system of anyone of claims 4 to 7 further comprising an auxiliary lean oil inlet means positioned downstream of said lean oil inlet means.

9. A process for the recovery of hydrocarbon vapors during the loading and unloading of a vessel, comprising:
   (a) collecting the vapors;
   (b) passing said vapors to an absorber column where said vapors are contacted in counter-current flow with a lean oil from a lean oil storage tank thereby absorbing said vapors in said lean oil to produce a rich oil;
   (c) collecting said rich oil from said absorber column in a rich oil storage tank and accumulating said rich oil to a preselected volume to efficiently remove the absorbed vapors by fractional distillation;
   (d) passing said accumulated rich oil to a fractional distillation column and actuating said fractional distillation column at said preselected volume
   (e) removing the absorbed vapors from said rich oil in said fractional distillation column thereby recovering lean oil from said fractional distillation column as bottoms and a hydrocarbon product as overheads from said fractional distillation column; and
   (f) returning said recovered lean to said lean oil storage tank.

10. The process according to claim 9 wherein said lean oil is chilled to about 40°F before contact with said vapors in said absorber column.

11. The process according to claim 9 wherein said overheads are condensed and stored.

12. The process according to claim 9 wherein step (d) is automatically actuated.

FIG. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | DE-C-854199 (GESELLSCHAFT FÜR LINDE'S EISMASCHINEN) <br> * the whole document * | 1-3 | B01D53/14 |
| Y | US-A-4111218 (J.W.HOBBS) <br> * claims 1, 2 * | 1-3 | |
| A | GB-A-1527990 (MITSUBISHI JUKOGYO K.K.) <br> * page 5; figure 1 * | 1-4, 9 | |
| A | DE-A-2316116 (INGERSOLL-RAND CO.) <br> * claims 1-26 * | 1, 4 | |

TECHNICAL FIELDS SEARCHED (Int. Cl.5 )

B01D

The present search report has been drawn up for all claims

| Place of search | Date of completion of the search | Examiner |
|---|---|---|
| BERLIN | 22 NOVEMBER 1991 | BERTRAM H.E.H. |

EPO FORM 1503 03.82 (P0401)